(19) **Europäisches Patentamt**

**European Patent Office**

**Office européen des brevets**

(11) **EP 1 698 498 A1**

(12) **DEMANDE DE BREVET EUROPEEN**

(43) Date de publication:
**06.09.2006 Bulletin 2006/36**

(51) Int Cl.:
**B60H 1/00** (2006.01)

(21) Numéro de dépôt: **06004145.6**

(22) Date de dépôt: **01.03.2006**

| | |
|---|---|
| (84) Etats contractants désignés:<br>**AT BE BG CH CY CZ DE DK EE ES FI FR GB GR HU IE IS IT LI LT LU LV MC NL PL PT RO SE SI SK TR**<br>Etats d'extension désignés:<br>**AL BA HR MK YU**<br><br>(30) Priorité: **04.03.2005 JP 2005059992**<br>**24.03.2005 JP 2005085827** | (71) Demandeur: **VALEO SYSTEMES THERMIQUES**<br>**78321 Le Mesnil St Denis Cedex (FR)**<br><br>(72) Inventeurs:<br>• **Kawamura, Yuji**<br>**c/o VALEO SYSTEMES THERMIQUES**<br>**78320 Le Mesnil St Denis (FR)**<br>• **Hiroyuki, Ida**<br>**c/o VALEO SYSTEMES THERMIQUES**<br>**78320 Le Mesnil St Denis (FR)** |

(54) **Dispositif d'estimation du couple d'un compresseur**

(57)    Nous proposons un dispositif d'estimation du couple d'un compresseur pour lequel il est possible d'estimer de façon optimale le couple du compresseur au moment du démarrage du compresseur et en fonction de la phase après que le compresseur a démarré pouvant effectuer avec une bonne précision l'estimation du couple.

Le dispositif d'estimation du couple d'un compresseur peut être utilisé dans un système équipé d'un cycle de réfrigération où un réfrigérant circule grâce à un compresseur entraîné par la force motrice du véhicule.

Il possède un moyen de détermination du démarrage qui détermine que le compresseur a réellement commencé son fonctionnement, un moyen d'estimation du couple du compresseur en se basant sur le temps écoulé après avoir déterminé que le compresseur a commencé son fonctionnement par ce moyen de détermination du démarrage et/ou un moyen d'estimation du couple de la phase stabilisée qui estime le couple du compresseur en se basant sur l'état de charge thermique du cycle de réfrigération.

En fonction de la phase après le démarrage du compresseur, il fait basculer le moyen qui estime le couple du compresseur entre plusieurs moyens d'estimation du couple qui incluent un moyen d'estimation du couple de la phase de démarrage et un moyen d'estimation du couple de la phase stabilisée.

**Figure 3**

EP 1 698 498 A1

**Description**

La présente invention est relative à une technique d'estimation du couple d'un compresseur utilisé dans un cycle de réfrigération monté sur un véhicule.

Le couple nécessaire aux auxiliaires sur véhicule est transmis à l'unité de contrôle du moteur (ECU). Contrôler la quantité de carburant injectée de telle sorte que, grâce à cette ECU, le moteur et les auxiliaires sur véhicule s'équilibrent sur un couple qui soit le plus petit possible est utile pour diminuer la quantité de carburant consommée, dans le contexte récent où la pression s'accroît pour inciter à la diminution de consommation de carburant des véhicules. Pour ce faire, il est important de pouvoir estimer de façon pertinente, seulement par des capteurs déjà existants, le couple du compresseur du climatiseur dont la puissance consommée est la plus élevée parmi les auxiliaires sur véhicule.

Dans un tel contexte, des techniques de calcul du couple du compresseur ont été étudiées telles que celles présentées dans les textes des brevets 1 et 2 ci-dessous.

Parmi celles-ci, le dispositif de calcul du couple du compresseur présenté dans JP H5-96936, en déterminant la pression d'éjection du réfrigérant par le compresseur, ne fait que retarder la variation des conditions de charge du condenseur côté air d'un retard correspondant à la variation de capacité thermique de ce condenseur. Ce dispositif détermine la capacité d'échange thermique du condenseur par le temps écoulé correspondant à ce retard, et calcule le couple du compresseur en fonction de ces pression d'éjection et capacité d'échange thermique déterminées.

Comme alternative, la méthode d'estimation du couple présentée dans WO 03/053727 calcule la quantité de réfrigérant circulant après équilibre du bilan thermique du compresseur en utilisant l'expression relationnelle de la quantité de réfrigérant circulant basée sur l'équilibre du bilan thermique du cycle de réfrigération. Cette méthode estime le couple du compresseur sur cette base.

Le compresseur démarre un peu en retard après que le signal de démarrage de la climatisation (instant ON d'embrayage pour un compresseur à embrayage, instant ON du signal de service pour un compresseur sans embrayage) est transmis au compresseur. Même si le compresseur commence son fonctionnement après que le signal de démarrage de la climatisation est envoyé , il faut du temps jusqu'à ce que le bilan thermique soit équilibré dans le condenseur (du fait de la capacité thermique propre du condenseur, même si le réfrigérant est rayonné de la chaleur en passant dans le condenseur, la température de l'air qui passe dans le condenseur ne varie pas instantanément, et il faut du temps pour que le chauffage côté air et la quantité de chaleur rayonnée côté réfrigérant dans le condenseur s'égalisent). La variation de pression du cycle de réfrigération, par exemple la pression côté haute pression Ph, suit avec retard la variation de couple réel du compresseur. De ce fait, même si on utilise dans le calcul du couple la variation de pression détectée par le capteur de pression déjà existant, la pression du cycle de réfrigération ne suivant pas immédiatement. En utilisant, après l'avoir appréhendé, l'équilibre de ce bilan thermique pour le calcul du couple, bien que le compresseur travaille déjà réellement, le bilan thermique n'étant pas équilibré, on rencontre l'inconvénient que le couple réel du démarrage n'est pas répercuté au moment du démarrage du compresseur et ne peut pas être estimé de façon optimale.

En observant les techniques classiques sous cet angle, la technique présentée dans JP H5-96936 ne fait que retarder la variation des conditions de charge du condenseur côté air d'un retard correspondant à la variation de capacité thermique de ce condenseur. Comme elle calcule le couple de ce compresseur en déterminant la capacité thermique au temps écoulé de ce retard, cette technique ne prévoit pas d'estimer vraiment le couple au temps de montée au moment du démarrage du compresseur.

La technique présentée dans WO 03/053727 calcule la quantité de réfrigérant circulant après l'équilibre du bilan thermique du compresseur en utilisant l'expression relationnelle de la quantité de réfrigérant circulant basée sur l'équilibre du bilan thermique du cycle de réfrigération. Parce que le couple du compresseur est estimé sur cette base, l'estimation du couple du compresseur est possible avec une bonne précision en régime stationnaire une fois que le bilan thermique est équilibré, mais l'estimation du couple ne peut pas être faite avec une bonne précision au temps de montée au moment du démarrage du compresseur.

La présente invention a été mise au point eut égard aux circonstances décrites précédemment. Elle a pour objet principal de proposer un dispositif d'estimation du couple d'un compresseur pouvant effectuer avec une bonne précision l'estimation du couple au moment du démarrage du compresseur et estimer de façon pertinente le couple du compresseur en fonction de la phase après que le compresseur a démarré.

Les présents inventeurs ont appréhendé précisément le moment où le couple apparaît après que le compresseur commence réellement son fonctionnement, la consigne de démarrage du compresseur ayant été envoyée. Ils ont trouvé qu'il est possible d'estimer le couple, à partir de ce moment, avec une bonne précision, lors d'une phase transitoire dans la période initiale du démarrage du compresseur, en employant un modèle d'expulsion des gaz qui ne dépend pas de l'équilibre du bilan thermique. Les inventeurs de la présente invention ont également observé qu'il n'est pas possible d'estimer de façon pertinente le couple juste après le démarrage du compresseur dans le cas où on effectue l'estimation du couple dans la phase juste après que la consigne de fonctionnement du compresseur a été envoyée par le même moyen que l'estimation du couple dans la phase stabilisée du régime stationnaire. Ils ont trouvé qu'il est nécessaire d'effectuer une estimation du couple en fonction de la phase suivant le démarrage. Ils ont observé que le taux d'accroissement du couple au début du démarrage est une caractéristique à peu près constante ne dépendant pas de la charge thermique du cycle de réfrigération, puis que la pression du cycle de réfrigération devient maximale, en retard sur le moment où le couple est maximal, puis que la pression du cycle de réfrigération a tendance à évoluer graduellement vers une pression stationnaire, et que le moment où la pression du cycle de réfrigération est maximale correspond à un état où le démarrage du compresseur est terminé.

Afin de réaliser l'objet ci-dessus, le dispositif d'estimation du couple d'un compresseur relatif à la présente invention est caractérisé en ce qu'il est un dispositif d'estimation du couple d'un compresseur pouvant être utilisé dans un système équipé d'un cycle de réfrigération, où circule un réfrigérant grâce à un compresseur entraîné par une boîte de commande montée sur véhicule, et en ce qu'il possède un moyen de détermination du démarrage qui détermine que ledit compresseur a réellement débuté son fonctionnement, et un moyen d'estimation du couple qui estime le couple dudit compresseur en se basant sur le temps écoulé après avoir déterminé que ledit compresseur a débuté son fonctionnement à l'aide dudit moyen de détermination du démarrage.

Par conséquent, dans la période initiale du démarrage du compresseur, même si le signal de démarrage de la climatisation est transmis au compresseur, un retard apparaît qui dure jusqu'à ce que le compresseur débute réellement son fonctionnement. Mais lorsque le compresseur démarre, il est déterminé qu'il a réellement débuté son fonctionnement à l'aide du moyen de détermination du démarrage. Comme le couple du compresseur est estimé en se basant sur le temps écoulé à partir de ce moment, il est possible d'estimer le couple à partir du moment où le couple apparaît après que le compresseur a réellement débuté son fonctionnement.

Ici, le moyen de détermination du démarrage peut déterminer le démarrage du compresseur en se basant sur la variation de pression du cycle de réfrigération, et il peut servir à déterminer le démarrage du compresseur en se basant concrètement sur la variation de pression du réfrigérant côté haute pression du cycle de réfrigération.

Selon une telle configuration, la pression du cycle de réfrigération variant lorsque le réfrigérant est éjecté par le démarrage du compresseur, en appréhendant cette variation, il est possible de détecter avec assurance que le compresseur a démarré.

Comme alternative, le moyen d'estimation du couple est équipé d'un moyen d'estimation de la quantité de réfrigérant circulant à la période initiale du démarrage qui calcule la quantité de réfrigérant circulant à la période initiale du démarrage dudit compresseur en se basant sur ledit temps écoulé. Ce moyen peut servir à estimer le couple dudit compresseur en rapport avec la quantité de réfrigérant circulant à la période initiale du démarrage calculée par le moyen d'estimation de la quantité de réfrigérant circulant à la période initiale du démarrage.

On effectue continuellement l'estimation du couple de l'état transitoire de la période initiale du démarrage du compresseur jusqu'à l'état stationnaire où le bilan thermique est équilibré. Ainsi, en plus du moyen qui calcule la quantité de réfrigérant circulant à la période initiale du démarrage du compresseur décrit ci-dessus, on installe un moyen d'estimation de la quantité de réfrigérant circulant à l'équilibre du bilan thermique, qui calcule la quantité de réfrigérant circulant après équilibre du bilan thermique dudit compresseur en utilisant l'expression relationnelle de la quantité de réfrigérant circulant basée sur l'équilibre du bilan thermique du cycle de réfrigération. Le moyen d'estimation du couple peut servir à estimer le couple du compresseur en se basant sur la valeur calculée de la quantité de réfrigérant circulant dans la période initiale du démarrage dudit compresseur calculée par le moyen de calcul de la quantité de réfrigérant circulant à la période initiale du démarrage, et sur la quantité de réfrigérant circulant après équilibre du bilan thermique obtenue par le moyen d'estimation de la quantité de réfrigérant circulant à l'équilibre du bilan thermique.

Avec une telle configuration, l'estimation du couple est possible avec une bonne précision de la période initiale du démarrage du compresseur jusqu'au régime stationnaire. En utilisant la quantité de réfrigérant circulant à la période initiale du démarrage, il est possible d'estimer le couple dans la période initiale du démarrage du compresseur qui ne peut pas être appréhendé par l'estimation de la quantité de réfrigérant circulant à partir de l'expression relationnelle de la quantité de réfrigérant circulant basée sur l'équilibre du bilan thermique. C'est-à-dire, dans la période initiale du démarrage du compresseur, il est possible d'estimer la quantité de réfrigérant circulant en se basant principalement sur l'expression relationnelle de la quantité de réfrigérant circulant du compresseur, et, dans le régime stationnaire du compresseur, il est possible d'estimer la quantité de réfrigérant circulant en se basant principalement sur l'expression relationnelle de la quantité de réfrigérant circulant basée sur l'équilibre du bilan thermique.

Ledit moyen d'estimation de la quantité de réfrigérant circulant à la période initiale du démarrage peut servir à calculer la quantité de réfrigérant circulant à la période initiale du démarrage dudit compresseur en multipliant la valeur correspondant au temps jusqu'à ce que soit atteint l'équilibre du bilan thermique après que ledit compresseur a démarré, ainsi que, le terme d'atténuation qui a été calculé en se basant sur ledit temps écoulé, par la plus grande capacité d'éjection dudit compresseur, ainsi que, par le débit de réfrigérant circulant de la période initiale correspondant au moment de plus grand volume calculé en se basant sur le rapport entre, le temps jusqu'à ce que soit atteint le couple maximal après que ledit compresseur a démarré, et ledit temps écoulé.

Comme moyen d'estimer concrètement la quantité de réfrigérant circulant à la période initiale du démarrage (Gr_start), il est par exemple possible d'utiliser l'expression arithmétique représentée par la formule 1 ci-dessous.

Formule 1

Gr-start = ηv * (t/tmax) * Disp / (Rr134*(Ts+T0)/((Ps+P0)/P0)*Cg) * Exp(-t/tbal)

(lorsque t≤tmax)

Gr-start = ηv * Disp / (Rr134*(Ts+T0)/((Ps+P0)/P0)*Cg) * Exp(-t/tbal)

(lorsque t>tmax)

Ici, ηv est le rendement volumique, t est le temps écoulé après que le compresseur a réellement démarré, tmax est le temps écoulé jusqu'à atteindre le plus grand couple après que le compresseur a réellement démarré, Disp est la plus grande capacité d'éjection du compresseur, Nc est la vitesse de rotation du compresseur, Rr134a est la constante de gaz R134a du réfrigérant, Ts est la température du réfrigérant aspiré à l'entrée du compresseur, T0 est la température absolue (273,15°C), Cg est le niveau de pompage du compresseur qui règle le rendement volumique, tbal est le temps jusqu'à atteindre l'équilibre du bilan thermique. Ces grandeurs représentent respectivement les valeurs correspondantes.

Selon un autre exemple de réalisation, le dispositif d'estimation du couple d'un compresseur relatif à la présente invention est caractérisé en ce qu'il est un dispositif d'estimation du couple d'un compresseur pouvant être utilisé dans un système équipé d'un cycle de réfrigération où un réfrigérant circule grâce à un compresseur entraîné par la force motrice du véhicule monté sur véhicule, en ce qu'il est équipé d'un moyen d'estimation du couple de la phase de démarrage qui estime le couple dudit compresseur juste après que ledit compresseur a démarré, et d'un moyen d'estimation du couple de la phase stabilisée qui estime le couple dudit compresseur en se basant sur l'état de la charge thermique dudit cycle de réfrigération, et en ce que, en fonction de la phase après ledit démarrage du compresseur, il fait basculer le moyen qui estime le couple dudit compresseur entre plusieurs moyens d'estimation du couple qui incluent ledit moyen d'estimation du couple de la phase de démarrage et ledit moyen d'estimation du couple de la phase stabilisée.

Il devient ainsi possible de basculer séquentiellement le moyen d'estimation du couple après le démarrage du compresseur de telle sorte que, dans la période initiale du démarrage du compresseur, il estime le couple du compresseur par le moyen d'estimation du couple de la phase de démarrage, et, en régime constant, il estime le couple du compresseur par le moyen d'estimation du couple de la phase stabilisée. L'estimation du couple devient possible de façon pertinente en fonction de l'étape après le démarrage du compresseur.

Dans la configuration décrite ci-dessus, il est en plus possible d'installer un moyen d'estimation du couple de la phase transitoire qui fait passer asymptotiquement la valeur estimée du couple, de la valeur estimée du couple obtenue par ledit moyen d'estimation du couple de la phase de démarrage, vers la valeur estimée du couple obtenue par ledit moyen d'estimation du couple de la phase stabilisée.

Dans une telle configuration, comme la valeur estimée du couple change asymptotiquement à l'aide du moyen d'estimation du couple de la phase transitoire lorsqu'il passe de la phase de démarrage à la phase stabilisée, il est possible d'estimer continuellement le couple du compresseur en se conformant aux variations du couple. Mais il est également possible que les variations brusques de la valeur estimée du couple soient évitées lorsqu'on passe de la phase de démarrage à la phase stabilisée.

Ici, le taux d'accroissement du couple du compresseur de la phase de démarrage étant une caractéristique presque constante en dépit de l'état de charge thermique, le moyen d'estimation du couple de la phase de démarrage peut calculer le couple du compresseur en se basant sur le temps écoulé après que le compresseur a démarré, et il peut par exemple estimer le couple du compresseur en se basant sur une expression arithmétique avec comme seule variable le temps écoulé après que le compresseur a démarré.

Comme alternative, le moyen d'estimation du couple de la phase de démarrage peut être équipé d'un moyen de détermination de la limite supérieure du couple de la phase de démarrage qui détermine la limite supérieure de la valeur estimée du couple de la phase de démarrage. On peut concevoir qu'un tel moyen de détermination de la limite supérieure du couple de la phase de démarrage détermine la limite supérieure de la valeur estimée du couple de la phase de démarrage en fonction de l'état de charge thermique du cycle de réfrigération (revendication 5).

De plus, le basculement depuis l'estimation du couple par le moyen d'estimation du couple de la phase de démarrage vers l'estimation du couple par un autre moyen d'estimation du couple peut être effectué en se basant sur le résultat de détermination par un moyen de détermination d'achèvement de la phase de démarrage qui détermine l'achèvement de la phase de démarrage. Ici, le moyen de détermination de l'achèvement de la phase de démarrage peut déterminer l'achèvement de la phase de démarrage en se basant sur la variation de haute pression du cycle de réfrigération.

Comme alternative, ledit moyen d'estimation du couple de la phase transitoire peut calculer la valeur estimée du couple dans la phase transitoire en se basant sur la valeur maximale de la valeur estimée du couple dans la phase de démarrage et sur la valeur estimée du couple obtenue par le moyen d'estimation du couple de la phase stabilisée.

Comme décrit ci-dessus, selon la présente invention, on appréhende le moment où le fonctionnement réel du compresseur commence, par exemple par la variation de pression du réfrigérant du cycle de réfrigération. Comme on estime le couple du compresseur à partir de ce moment en se basant sur le temps écoulé à partir du commencement de fonctionnement du compresseur qui ne dépend pas de l'équilibre du bilan thermique, il est possible d'estimer avec une bonne précision le couple de la période initiale du démarrage du compresseur.

D'autres avantages et caractéristiques de l'invention apparaîtront à la lecture de la description qui suit. Cette description est purement illustrative et est donnée à titre d'exemple et doit être lue en se référant aux figures annexées

La figure 1 est un schéma fonctionnel sommaire du système monté sur véhicule pour effectuer une estimation du couple du compresseur.

La figure 2 est un organigramme qui présente un premier exemple de calcul d'estimation du couple à l'aide de l'unité de contrôle de la climatisation (A/C CU) de la figure 1.

La figure 3 est un organigramme qui détaille une méthode concrète de calcul d'estimation du couple de la figure 2.

La figure 4 est un diagramme qui représente les relations entre, le couple estimé obtenu par le calcul d'estimation du couple de la figure 3 (courbe pleine), le couple déterminé en utilisant l'expression relationnelle de la quantité de réfrigérant circulant basée sur la capacité d'éjection du compresseur (courbe pointillée), et le couple estimé en utilisant l'expression relationnelle de la quantité de réfrigérant circulant basée sur l'équilibre du bilan thermique du cycle de réfrigération (courbe tiretée mixte).

La figure 5 est un organigramme qui présente un second exemple d'estimation du couple à l'aide de l'unité de contrôle de la climatisation (A/C CU) de la figure 1.

La figure 6 est un diagramme de caractéristiques qui présente les estimations du couple de la phase de démarrage et leurs limites supérieures.

La figure 7 est un diagramme qui présente la relation entre la température de l'évaporateur Te détectée par le capteur de température de l'évaporateur et la pression côté basse pression Pe du cycle de réfrigération.

La figure 8 est un diagramme qui présente la relation entre la différence de la pression côté haute pression Ph et de la pression côté basse pression Pe du cycle de réfrigération (Ph-Pe) et la valeur estimée du couple stabilisé Trs.

La figure 9 est un diagramme qui présente la valeur estimée du couple du compresseur obtenue par le traitement d'estimation du couple de la figure 2 (ligne pointillée) et le couple réel du compresseur (ligne pleine), en même temps que le signal de consigne de fonctionnement du compresseur et la pression du cycle de réfrigération (pression côté haute pression Ph).

Nous détaillons ci-dessous la configuration d'un exemple de réalisation de cette invention à l'aide des figures.

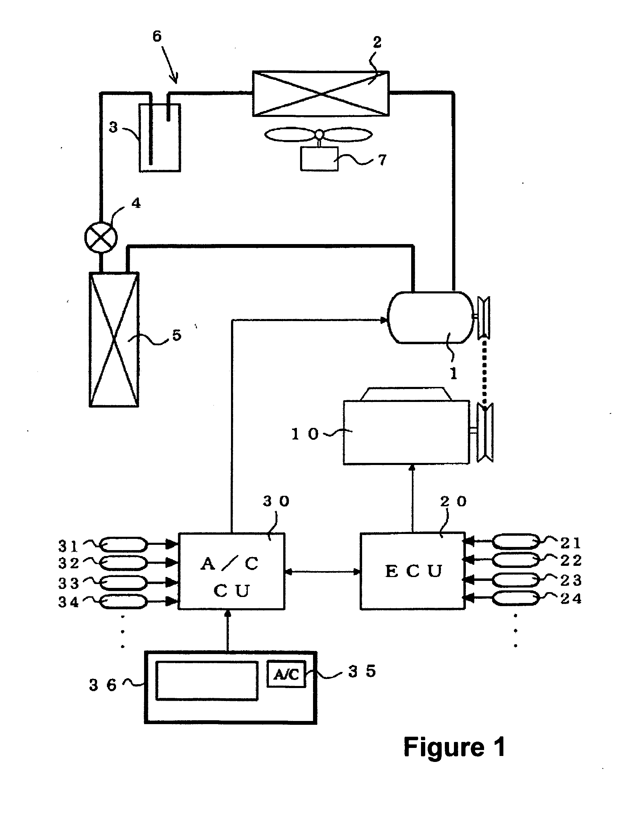

Sur la figure 1 est présenté un exemple de la structure du dispositif de climatisation monté sur véhicule. Ce dispositif de climatisation pour véhicule possède un compresseur 1 qui comprime un réfrigérant, un condenseur 2 qui liquéfie par condensation le réfrigérant comprimé par ce compresseur 1, un réservoir 3 qui, en même temps qu'il collecte le réfrigérant liquéfié par condensation par ce condenseur 2 et sépare le réfrigérant gazeux du réfrigérant liquide, et envoie seulement le réfrigérant liquide vers l'aval, un dispositif de détente 4 qui, en réduisant la pression, transforme le réfrigérant liquide envoyé depuis ce condenseur 3 en un mélange réfrigérant gaz-liquide de basse température et basse pression, un évaporateur 5 qui vaporise le mélange réfrigérant gaz-liquide de basse température et basse pression envoyé depuis ce dispositif de détente 4, et un cycle de réfrigération 6 constitué en les connectant par des tubes dans cet ordre.

Le compresseur 1 reçoit la puissance depuis le moteur de traction 10, et tourne en synchronisation avec ce moteur de traction 10. S'il est équipé d'un embrayage, il démarre en positionnant l'embrayage électromagnétique sur ON après avoir reçu le signal de consigne de démarrage. S'il est de type sans embrayage, il démarre en positionnant sur ON le signal de service appliqué à la valve de contrôle après avoir reçu le signal de consigne de démarrage.

Ledit moteur de traction 10 est contrôlé par l'unité de contrôle du moteur (ECU) 20. Cette ECU 20 est alimentée par des signaux depuis le capteur 21 d'ouverture de l'accélérateur qui détecte l'appui de la pédale d'accélérateur représentant l'ouverture du papillon des gaz installé sur le tube d'admission du moteur, depuis le capteur de vitesse du véhicule 22 qui détecte la vitesse du véhicule (Vcar), depuis le capteur de vitesse de rotation du moteur 23 qui détecte la vitesse de rotation du moteur (Neng), et depuis le capteur de tension du ventilateur 24 qui détecte la tension appliquée sur le ventilateur du condenseur 7 (tension du ventilateur : Efan) qui refroidit le condenseur 2. Elle contrôle à la valeur optimale notamment la quantité de carburant injectée, la distribution d'injection et l'instant d'allumage qui correspond au couple nécessaire, en se basant sur les informations obtenues depuis les signaux issus de ces capteurs, et sur la valeur estimée du couple du compresseur décrite dans la suite.

Le dispositif de climatisation pour véhicule qui inclut le compresseur 1 est contrôlé par l'unité de contrôle de la climatisation (A/C CU) 30. Cette unité de contrôle du climatiseur (A/C CU) 30 est alimentée par différents signaux depuis le capteur de haute pression 31 qui détecte la haute pression du réfrigérant (Ph) du côté de la sortie du condenseur 2, depuis le capteur de température de l'évaporateur 32 qui détecte la température (ci-dessous dénommée température de l'évaporateur Te) en relation avec la température du réfrigérant de l'évaporateur 5 telle que la température de surface de l'évaporateur 2, ou la température de l'air qui passe dans l'évaporateur 5, depuis le capteur de pression d'admission 33 qui détecte la pression d'admission (Ps) du compresseur 1, et depuis le capteur de température de l'air extérieur 34 qui détecte la température de l'air extérieur (Tamb). Elle est en même temps alimentée par les signaux de l'interrupteur de climatisation (interrupteur A/C) 35 ou du panneau de service 36 équipé d'un régulateur de température qui règle la température visée de l'habitacle, et elle réalise le contrôle complet du dispositif de climatisation.

Ici, l'unité de contrôle du moteur (ECU) 20 et l'unité de contrôle de la climatisation (A/C CU) 30 sont constituées d'un dispositif de calcul central (CPU), d'une mémoire morte (ROM), d'une mémoire vive ou à accès dynamique (RAM), et d'un port d'entrée-sortie, ce qui est largement connu. Elles traitent les différents signaux reçus en suivant un programme fixe alloué à la mémoire. Elles effectuent notamment des traitements qui calculent par estimation le couple du compresseur 1 selon la méthode décrite ci-dessous, dans l'unité de contrôle de la climatisation (A/C CU) 30, et qui transmettent la valeur estimée du couple de ce calcul vers l'unité de contrôle du moteur (ECU) 20.

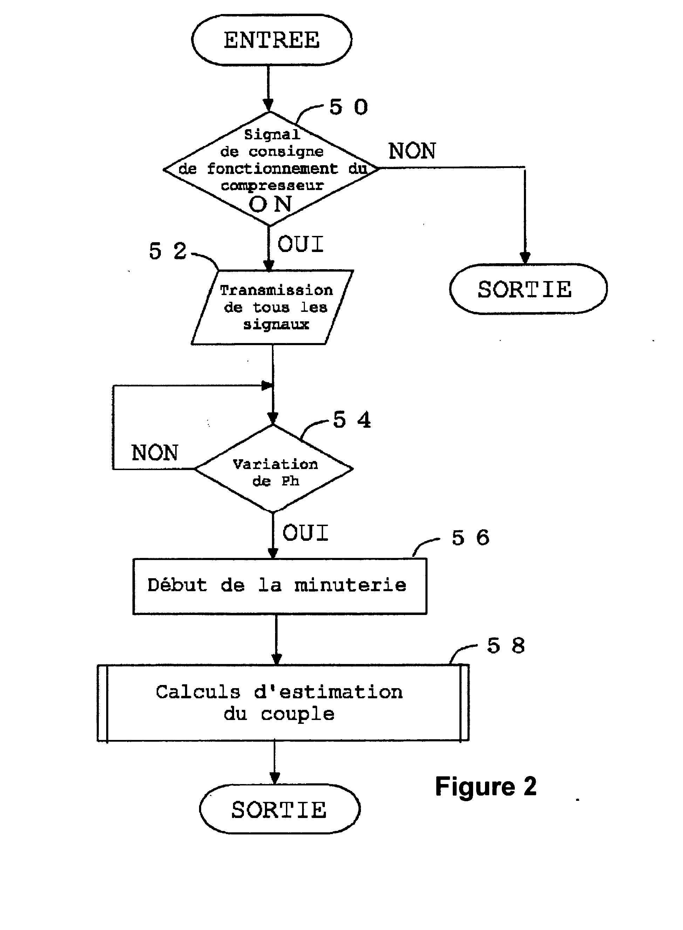

Sur la figure 2, un exemple de calcul effectuant l'estimation du couple du compresseur 1 est présenté sous forme d'organigramme. Nous détaillons ci-dessous un exemple de calcul de l'estimation du couple en se basant sur cet organigramme.

En tant que contrôle du compresseur, l'unité de contrôle de la climatisation (A/C CU) 30 sert à effectuer ce traitement de contrôle dans le cas où le fonctionnement du cycle de réfrigération est rendu possible après que l'interrupteur d'allumage est enclenché. A l'étape 50, on détermine si le signal de consigne de fonctionnement du compresseur 1 a été entré dans l'unité de contrôle de la climatisation 30 (ON) par enclenchement de l'interrupteur A/C 35 (étape 50). Dans le cas où, à cette étape, il est déterminé que le signal de consigne de fonctionnement du compresseur 1 est transmis (ON), les différents signaux (les signaux depuis les capteurs côté climatisation, tels que le capteur de haute pression 31, le capteur de température de l'évaporateur 32, le capteur de pression d'admission 33, le capteur de température de l'air extérieur 34, ainsi que les signaux depuis le capteur de vitesse du véhicule 22, le capteur de vitesse de rotation du moteur 23, le capteur de tension du ventilateur 24 fournis par l'intermédiaire de l'unité de contrôle du moteur 20) sont transmis (étape 52). Et à l'étape 54, après que la consigne de fonctionnement du compresseur 1 a été reçue, le compresseur 1 commence réellement son fonctionnement, c'est-à-dire que le moment du démarrage est détecté.

Lorsque le compresseur 1 démarre, la pression du réfrigérant augmente immédiatement à l'intérieur du condenseur 2 à cause du réfrigérant qui est éjecté depuis le compresseur 1. Ainsi la détection du moment où ce compresseur 1 démarre est effectuée en appréhendant cette variation.

Ensuite, après que cette variation a été détectée, on commence à compter le temps écoulé (t) avec une minuterie (étape 56). On obtient la valeur estimée du débit de réfrigérant circulant du cycle de réfrigération 6, en faisant la somme de la quantité de réfrigérant circulant calculée en utilisant l'expression relationnelle de la quantité de réfrigérant circulant basée sur la capacité d'éjection du compresseur, et de la quantité de réfrigérant circulant après équilibre du bilan thermique calculée en utilisant l'expression relationnelle de la quantité de réfrigérant circulant basée sur l'équilibre du bilan thermique du cycle de réfrigération. On effectue alors le calcul qui estime le couple du compresseur à partir de la quantité de réfrigérant circulant ainsi obtenue.

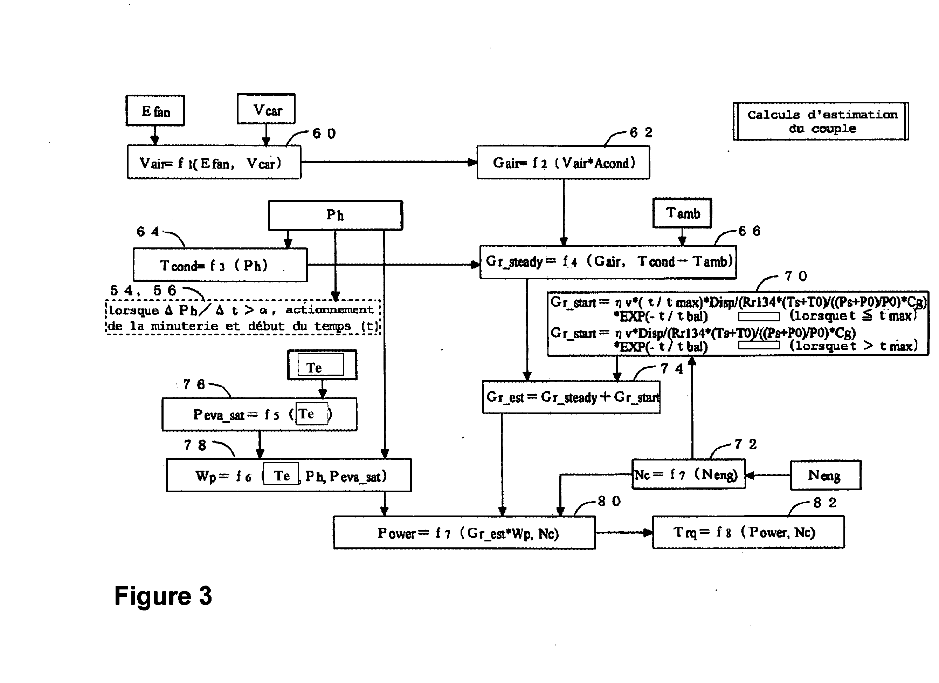

Le calcul d'estimation du couple selon cette étape 58 est effectué concrètement comme présenté sur la figure 3. On calcule d'abord la vitesse moyenne du vent (Vair) qui entre dans le condenseur 2 en se basant sur la vitesse du véhicule (Vcar) et la tension du ventilateur (Efan) (étape 60). Puis on calcule le débit de masse d'air (Gair) qui s'écoule dans le condenseur 2 à partir de cette vitesse moyenne du vent (étape 62).

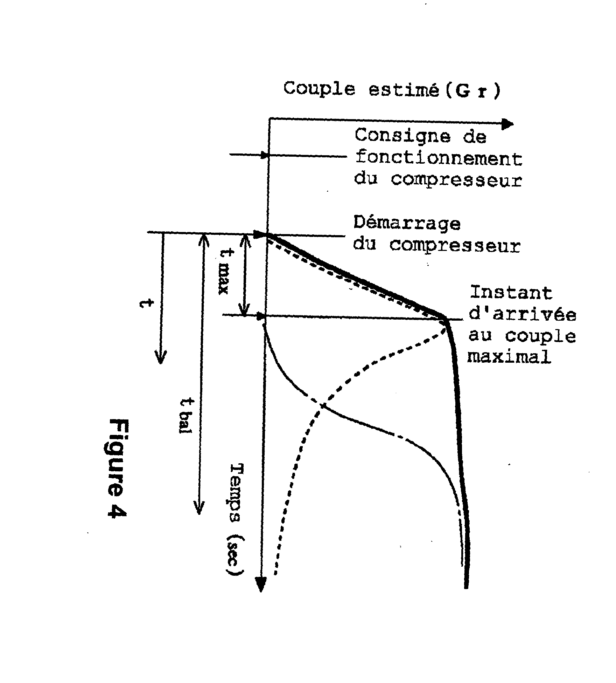

On calcule la température de condensation (Tcond) du réfrigérant dans le condenseur 2 en se basant sur la haute pression du réfrigérant (Ph) (étape 64). Puis on estime la quantité de réfrigérant circulant (Gr_steady) en régime stationnaire, à partir de l'expression relationnelle de la quantité de réfrigérant circulant qui équilibre le bilan thermique dans le condenseur 2, en se basant sur la différence entre cette température de condensation (Tcond) et la température de l'air extérieur, (Tamb) et sur ledit débit de masse d'air (Gair) (étape 66). Ici, équilibrer le bilan thermique revient à ce que soient égales la quantité de chaleur rayonnée côté réfrigérant, libérée par le réfrigérant quand il passe dans le condenseur 2, et la quantité de chaleur (chaleur apportée côté air) que reçoit l'air qui passe dans le condenseur 2. Lorsqu'on estime le couple du compresseur en se basant seulement sur cette expression arithmétique de la quantité de réfrigérant circulant qui équilibre le bilan thermique, on a la caractéristique présentée par la courbe tiretée mixte de la figure 4. Le couple de la période initiale du démarrage du compresseur 1 n'est pas répercuté et seul le couple en régime stationnaire où le bilan thermique est équilibré est principalement répercuté.

Ladite haute pression du réfrigérant (Ph) est utilisée pour détecter l'instant où le compresseur 1 démarre après que le signal de consigne de démarrage du compresseur 1 a été envoyé comme décrit précédemment. C'est-à-dire, après que le signal de consigne de démarrage du compresseur 1 a été envoyé, on détecte le démarrage en repérant l'évolution de l'augmentation de la haute pression du réfrigérant pour un temps unitaire (ΔPh/Δt), on actionne la minuterie à partir de ce moment, et on obtient le temps écoulé (t) après le démarrage dy compresseur (étapes 54, 56 précédentes).

Le calcul de la quantité de réfrigérant circulant (Gr_start) dans la période initiale du démarrage du compresseur 1 est obtenu à partir de l'expression relationnelle de la quantité de réfrigérant circulant basée sur la capacité d'éjection du compresseur présentée par la formule 2 ci-dessous (étape 70).

```
Formule 2
Gr-start     =     ηv    *    (t/tmax)    *    Disp    /
(Rr134*(Ts+T0)/((Ps+P0)/P0)*Cg) * Exp(-t/tbal)
         (lorsque t≤tmax)
Gr-start         =         ηv         *         Disp         /
(Rr134*(Ts+T0)/((Ps+P0)/P0)*Cg) * Exp(-t/tbal)
         (lorsque t>tmax)
```

Ici, ηv est le rendement volumique, t est le temps écoulé après que le compresseur a réellement démarré, tmax est le temps écoulé pour atteindre le couple maximal après que le compresseur a réellement démarré, Disp est la plus grande capacité d'éjection du compresseur, Nc est la vitesse de rotation du compresseur, Rr134a est la constante de gaz R134a du réfrigérant, Ts est la température du réfrigérant aspiré à l'entrée du compresseur, T0 est la température absolue (273, 15°C), Cg est le niveau de pompage du compresseur qui règle le rendement volumique, tbal est le temps jusqu'à atteindre l'équilibre du bilan thermique. Ces grandeurs représentent respectivement les valeurs correspondantes.

Le rendement volumique ηv peut être déterminé en obtenant expérimentalement le rendement préalablement à chaque révolution. La vitesse de rotation du.compresseur Nc est calculée à partir de la vitesse de rotation du moteur (Neng) détectée par le capteur de vitesse de rotation du moteur 23 (étape 72). De plus, tmax correspond au temps où le couple du compresseur atteint le couple maximal, et il a été préalablement obtenu expérimentalement tbal correspond au temps où le bilan thermique du cycle de réfrigération est équilibré, et il a été préalablement obtenu expérimentalement.

Cette expression relationnelle présentée par la formule 2 estime, par un modèle d'expulsion des gaz du compresseur, le débit transitoire de réfrigérant circulant qui accompagne l'opération du compresseur 1 jusqu'à atteindre l'équilibre du bilan thermique. Au fur et à mesure du temps écoulé (t) après que le compresseur 1 fonctionne, cette expression relationnelle atténue la quantité calculée de réfrigérant circulant. Par conséquent, lorsqu'on calcule le couple du compresseur en se basant seulement sur la quantité de réfrigérant circulant, obtenue par cette expression relationnelle, on a la caractéristique présentée par la courbe pointillée de la figure 4. Le couple de la période initiale du démarrage du compresseur est principalement répercuté.

En ajoutant la quantité de réfrigérant circulant (Gr_start) à la période initiale du démarrage obtenue par l'expression relationnelle de la quantité de réfrigérant circulant basée sur la capacité d'éjection de ce compresseur, à la quantité de réfrigérant circulant en régime stationnaire (Gr_steady), obtenue par l'expression relationnelle de la quantité de réfrigérant circulant qui équilibre le bilan thermique dans le condenseur 2, on a, par corollaire, la valeur estimée de la quantité de réfrigérant circulant (Gr_rest) depuis le début du démarrage du compresseur 1 jusqu'au régime stationnaire (étape 74).

On calcule la pression de saturation du réfrigérant Peva_sat en se basant sur la température de l'évaporateur Te (étape 76). Puis, on calcule l'énergie de compression (Wp) par unité de réfrigérant circulant en se basant sur cette pression de saturation du réfrigérant Peva_sat et sur ladite température de l'évaporateur Te, ainsi que sur ladite haute pression du réfrigérant (Ph) (étape 78). Ensuite, on estime la puissance du compresseur (Power) à partir de la vitesse de rotation du compresseur (Nc) et du produit de cette énergie de compression d'une unité de réfrigérant circulant (Wp) par la quantité de réfrigérant circulant (Gr_rest) (étape 80). Enfin on estime le couple du compresseur à partir de cette puissance du compresseur (Power) et de la vitesse de rotation du compresseur (Nc) (étape 82).

Il devient possible d'estimer le couple de la période initiale du démarrage du compresseur 1 en estimant la quantité de réfrigérant circulant à la période initiale du démarrage du compresseur, qui ne peut être appréhendée par la quantité de réfrigérant circulant estimée à partir de l'expression relationnelle de la quantité de réfrigérant circulant basée sur l'équilibre du bilan thermique, mais à partir de l'expression relationnelle de la quantité de réfrigérant circulant basée sur la capacité d'éjection du compresseur qui dépend du temps écoulé (t) après qu'il a été déterminé que le compresseur a commencé son fonctionnement. On fait s'atténuer cette dernière quantité de réfrigérant circulant à mesure que le bilan thermique s'équilibre. Une fois que le bilan thermique est équilibré, le couple du compresseur est calculé après que la quantité de réfrigérant circulant a été déterminée à partir de la seule expression relationnelle de la quantité de réfrigérant circulant basée sur l'équilibre du bilan thermique. Le couple calculé est alors tel que présenté par la courbe pleine de la figure 4. L'estimation du couple devient ainsi possible depuis la période initiale du fonctionnement du compresseur sur toute l'étendue du régime stationnaire. Il devient aussi possible d'effectuer avec une bonne précision une estimation du couple au moment du démarrage du compresseur.

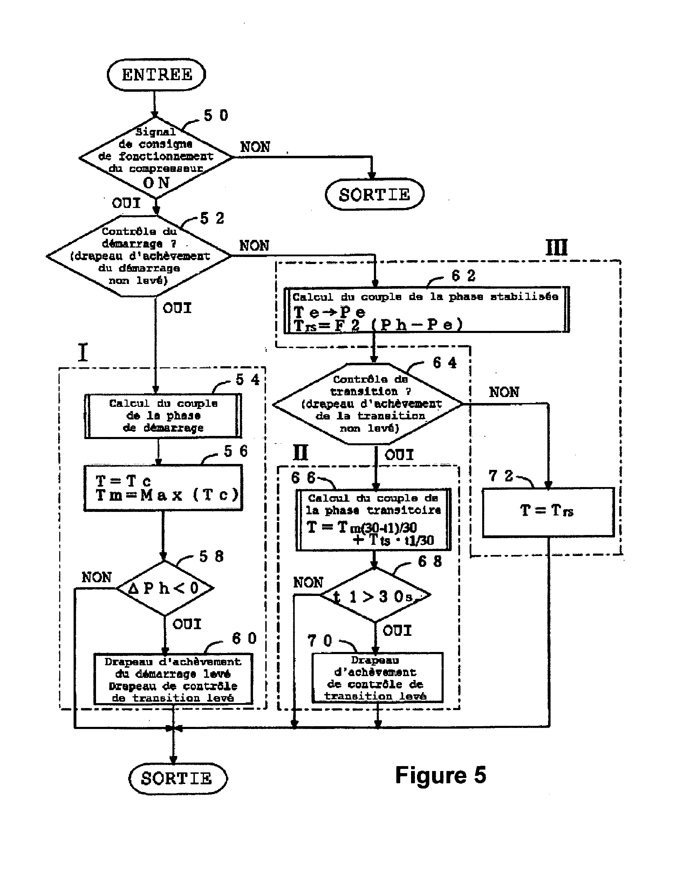

En référence à la figure 5, en tant que contrôle du compresseur, l'unité de contrôle de la climatisation (A/C CU) 30 sert à effectuer ce traitement de contrôle lorsque le fonctionnement du cycle de réfrigération 6 est rendu possible après que l'interrupteur d'allumage est enclenché. A l'étape 50, on détermine si le signal de consigne de fonctionnement du compresseur 1 a été entré dans l'unité de contrôle de la climatisation 30 (ON) par enclenchement de l'interrupteur A/C 35 (étape 50). Dans le cas où, à cette étape 50, elle détermine que le signal de consigne de fonctionnement du compresseur a été envoyé (ON), elle détermine si le démarrage du compresseur 1 s'est achevé, c'est-à-dire si le drapeau d'achèvement de démarrage décrit dans la suite est levé (étape 52). Dans le cas où il a été déterminé que le drapeau d'achèvement de démarrage n'est pas levé, elle poursuit vers l'étape 54 afin d'effectuer le calcul d'estimation du couple dans la phase de démarrage du compresseur 1. Dans ce cas, elle estime le couple du compresseur 1 en se basant sur le temps écoulé t (temps écoulé après que le signal de consigne de fonctionnement du compresseur a été envoyé) après que le compresseur a démarré.

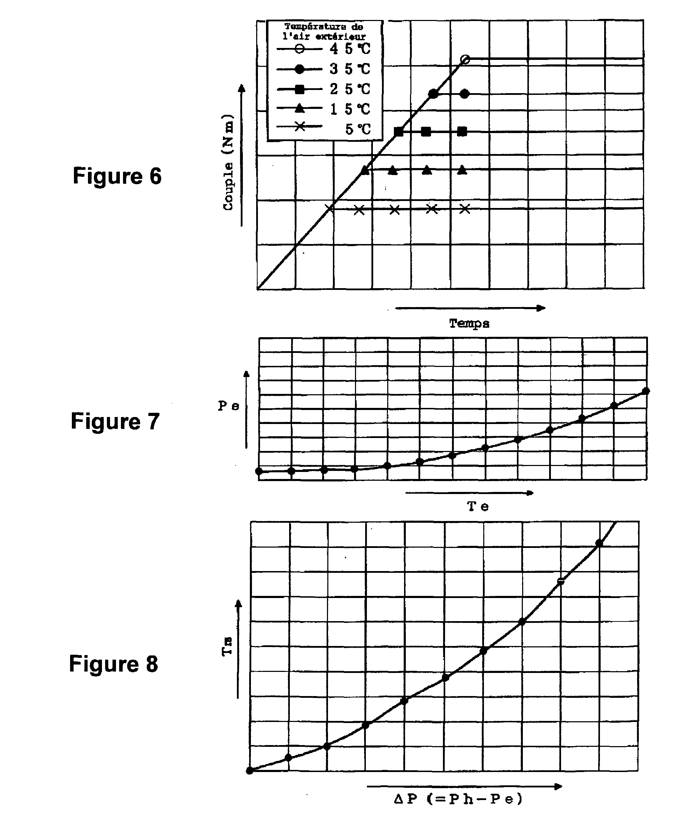

Cette estimation du couple du compresseur consiste à calculer une estimation du couple jusqu'à arriver à la limite supérieure fixée en se basant sur le seul temps écoulé après que le compresseur 1 a démarré, de telle sorte qu'il possède une caractéristique telle que présentée sur la figure 6. Selon les recherches des présents inventeurs, au moment du démarrage du compresseur 1, le taux d'accroissement du couple du compresseur 1 est presque identique pour un temps unitaire, même si la charge thermique (par exemple la température de l'air extérieur) diffère, et seule la valeur maximale du couple de démarrage (couple MAX) varie selon la charge thermique du cycle de réfrigération 6 (par exemple, la température de l'air extérieur). On trouve qu'il existe une tendance à ce que plus la charge thermique est grande, plus le couple MAX de l'instant de démarrage est grand. Si on calcule le couple de démarrage de telle sorte qu'il possède la caractéristique présentée sur la figure 6, on trouve que le couple dans la phase de démarrage peut être répercuté de façon pertinente.

Ici, à l'étape 54, on obtient la limite supérieure (MAX(Tc)) de la valeur estimée du couple de la phase de démarrage du compresseur en se basant sur la température de l'air extérieur Tamb, et on calcule la valeur estimée du couple (Tc) par exemple par une fonction linéaire du temps t (Tc=at+b), en se basant sur le seul temps écoulé t après que le compresseur a démarré, jusqu'à arriver à cette limite supérieure.

Ensuite, à l'étape 56, on prend comme grandeur de sortie de l'estimation du couple T la valeur estimée du couple Tc calculée à l'étape 54. On prend comme couple MAX au moment du démarrage Tm la limite supérieure (MAX(Tc)) déterminée en se basant sur la température de l'air extérieur (Tamb).

Selon le contrôle ci-dessus, la valeur estimée du couple est fournie à partir du moment où le signal de consigne de fonctionnement du compresseur 1 est envoyé. En réalité, le compresseur 1 démarrant légèrement en retard (environ 0,3 seconde de retard), l'information du couple est fournie légèrement en avance par rapport à la variation du couple réel du compresseur 1 (en avance d'environ 0,3 seconde). Mais puisqu' un léger retard de réponse existe dans l'unité de contrôle du moteur et dans le moteur, le retard de réponse côté moteur peut être comblé en fournissant l'information du couple légèrement en avance (en avance d'environ 0,3 seconde). Un contrôle sûr est ainsi possible. Comme alternative, lorsqu'il n'est pas nécessaire de considérer le retard de réponse côté moteur, il est possible proposer une configuration qui fasse en sorte que la valeur estimée du couple. est fournie en appliquant un retard fixe après que le signal de consigne de fonctionnement a été envoyé.

Ainsi, concernant l'accroissement du couple réel du compresseur au moment du démarrage, la pression du cycle de réfrigération (par exemple la pression côté haute pression Ph) dépasse le pic en augmentant légèrement en retard. De ce fait, lorsque la variation d'accroissement de cette pression est inférieure à zéro, c'est-à-dire, si on peut détecter que la pression commence à décroître après avoir atteint sa valeur maximale, à ce moment, il est possible de considérer que le démarrage du compresseur est déjà achevé.

Ici, à l'étape 58, on détermine si la variation de la pression (ΔPh) côté haute pression Ph détectée par le capteur de haute pression 31 est inférieure à zéro. S'il a été déterminé que ΔPh<0, on considère que la phase de démarrage est achevée, et on lève le drapeau d'achèvement du démarrage qui montre que le démarrage du compresseur 1 est achevé et le drapeau de contrôle de transition qui montre qu'on est dans la phase qui effectue le contrôle de transition. Le contrôle de démarrage se terminant, on peut commencer le contrôle de transition (étape 60).

Le traitement de l'étape de démarrage est fait selon le traitement en série présenté par ces étapes 54~60 (bloc indiqué par I), et le moyen d'estimation du couple de la phase de démarrage et le moyen de détermination d'achèvement de la phase de démarrage se composent des étapes 54 et 56, et de l'étape 58 respectivement.

Lorsque le drapeau d'achèvement de démarrage est levé, on détermine que la phase de démarrage se termine à l'étape précédente 52 (le drapeau d'achèvement de démarrage se lève). A l'étape 62, on calcule le couple du compresseur en régime stationnaire (couple du compresseur de la phase stabilisée). Concrètement, il existe une relation telle que présentée sur la figure 7, entre la température de l'évaporateur Te détectée par le capteur de température de l'évaporateur 32 et la pression côté basse pression Pe du cycle de réfrigération 6. Par ailleurs, une relation telle que présenté sur la figure 5 existe entre, la différence de pression côté haute pression Ph et de pression côté basse pression du cycle de réfrigération 6 (Ph-Pe), et la valeur estimée du couple stabilisé Trs en régime stationnaire du compresseur 1. On calcule alors la pression côté basse pression Pe du cycle de réfrigération 6 en se basant sur la température de l'évaporateur Te, et ensuite, on calcule la valeur estimée du couple stabilisé Trs en régime stationnaire (phase stabilisée) du compresseur 1 en se basant sur la différence entre la pression côté haute pression Ph du cycle de réfrigération 6 détectée par le capteur de température de l'évaporateur 31 et la pression côté basse pression du cycle de réfrigération 6 calculée à l'étape 62 précédente.

La continuité n'est pas assurée lorsque l'estimation du couple de la phase stabilisée ci-dessus (phase stationnaire) change brusquement à partir de l'estimation du couple de la phase de démarrage. Comme la valeur estimée du couple varie rapidement, il est souhaitable que soit interposé un contrôle de transition. Ici, à l'étape 64, on détermine si l'état du contrôle est au contrôle de transition (si le drapeau d'achèvement de transition n'est pas levé).

Ensuite, dans le cas où il est déterminé que le drapeau d'achèvement de transition n'est pas levé à l'étape 64, on poursuit à l'étape 66 afin d'effectuer le contrôle de transition, et on calcule le couple du compresseur de la phase de transition. Le calcul du couple de cette phase de transition réduit progressivement la valeur estimée du couple MAX Tm déterminé en ce basant sur la charge thermique, jusqu'à la valeur estimée du couple stabilisé Trs du régime stationnaire (phase stabilisée) calculée à l'étape 62. Si on suppose qu'il y a un transit lent sur 30 secondes, on estime le couple du compresseur dans la phase de transition par l'expression arithmétique en exemple dans la même étape, avec le temps écoulé t1 après être entré dans la phase de transition. Puis, il est déterminé si les 30 secondes se sont écoulées depuis le passage au contrôle de transition (étape 68). Lorsqu'on arrive au couple du régime stationnaire pour lequel la valeur estimée du couple après que 30 secondes sont écoulées est calculée à l'étape 62, on termine le contrôle de transition en levant le drapeau d'achèvement du contrôle de transition (étape 70).

Le traitement de la phase de transition est fait selon le traitement en série présenté par ces étapes 66~70 (bloc indiqué par II), et le moyen d'estimation du couple de la phase de transition se compose de l'étape 66.

Ensuite, lorsqu'il est déterminé que le contrôle de transition est achevé à l'étape 64, c'est-à-dire, lorsqu'il est déterminé que le drapeau d'achèvement de transition est levé, on poursuit à l'étape 72. On effectue l'estimation du couple de la phase stabilisée qui prend la valeur estimée du couple stabilisé Trs calculé à l'étape 62 comme valeur de sortie estimée du couple T. Le traitement dans la phase stabilisée (moyen d'estimation du couple de la phase stabilisée) est composé du traitement en série présenté par ces étapes 62 et 72 (bloc indiqué par III).

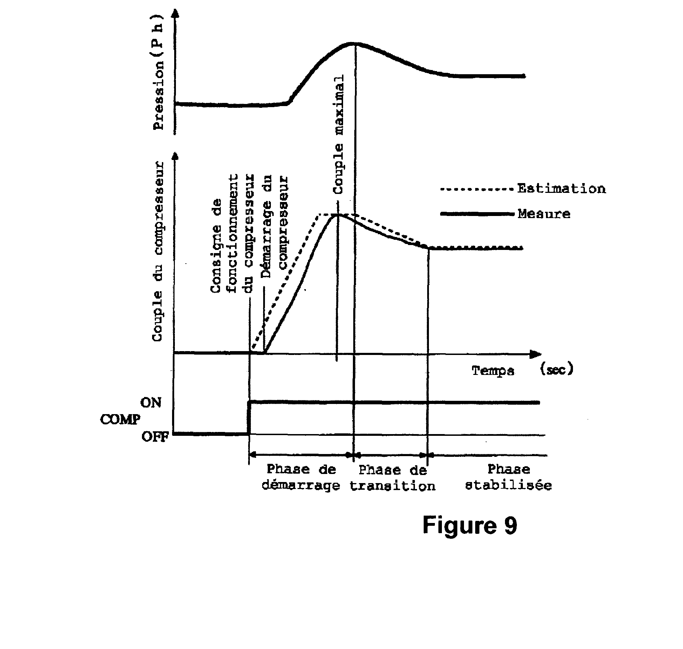

Selon le contrôle ci-dessus, tel que présenté sur la figure 9, le couple du compresseur 1 est estimé en se basant sur le temps écoulé t après que le compresseur a démarré, depuis le moment où la consigne de fonctionnement qui fait passer le compresseur de OFF à ON, jusqu'à la limite supérieure déterminée préalablement par la charge thermique. Après avoir atteint la limite supérieure, on passe à la valeur de cette limite supérieure (phase de démarrage), et la valeur du couple, estimée au moment où la pression côté haute pression Ph dépasse le pic, passe progressivement en un temps donné (phase de transition), à la valeur du couple du régime stationnaire (phase stabilisée). Ensuite, lorsque la valeur du couple estimée du compresseur 1 atteint la valeur du régime stationnaire, la valeur estimée du couple calculée en se basant sur la différence entre la pression côté haute pression Ph et la pression côté basse pression Pe du cycle de réfrigération est répercutée (phase stabilisée).

Ainsi, selon le contrôle ci-dessus, il devient possible d'estimer de façon pertinente le couple du compresseur en fonction de la phase après que le compresseur a démarré. En particulier dans la phase de démarrage, il devient possible d'effectuer l'estimation du couple équilibré par les variations du couple réel, parce qu'on n'utilise pas de relation avec la pression du cycle de réfrigération, et que le couple est estimé en se basant sur le temps écoulé après que le compresseur a démarré. Avec la configuration précédente, l'estimation du couple équilibré par les variations du couple réel devient possible, parce qu'on fait passer successivement la valeur estimée du couple de la phase de démarrage à la phase stabilisée en prévoyant une phase de transition. Il devient finalement possible de limiter les variations rapides de la valeur estimée du couple lorsqu'on passe rapidement de la phase de démarrage à la phase stabilisée.

**Revendications**

1. Dispositif d'estimation du couple d'un compresseur **caractérisé en ce qu'**il est un dispositif d'estimation du couple d'un compresseur utilisable dans un système équipé d'un cycle de réfrigération dont le réfrigérant circule grâce à un compresseur entraîné par la force motrice du véhicule, et **en ce qu'**il possède un moyen de détermination du démarrage qui détermine que ledit compresseur débute réellement son fonctionnement, et d'un moyen d'estimation du couple de la phase de démarrage qui estime le couple dudit compresseur juste après que ledit compresseur a démarré, et

**2.** Dispositif d'estimation du couple d'un compresseur selon la revendication 1, **caractérisé en ce** le moyen d'estimation du couple estime le couple dudit compresseur en se basant sur le temps écoulé après qu'il a été estimé par ledit moyen de détermination du démarrage que ledit compresseur a débuté son fonctionnement.

**3.** Dispositif d'estimation du couple d'un compresseur de la revendication 1 ou 2 **caractérisé en ce qu'**il détermine le démarrage dudit compresseur en se basant sur la variation de pression dudit cycle de réfrigération.

**4.** Dispositif d'estimation du couple d'un compresseur selon la revendication 3 **caractérisé en ce que** la variation de pression dudit cycle de réfrigération est une variation de pression du réfrigérant côté haute pression.

**5.** Dispositif d'estimation du couple selon l'une des revendications 1 à 4 **caractérisé en ce que** ledit moyen d'estimation du couple est équipé d'un moyen d'estimation de la quantité de réfrigérant circulant à la période initiale du démarrage qui calcule la quantité de réfrigérant circulant de la période initiale du démarrage dudit compresseur en se basant sur ledit temps écoulé, estime le couple dudit compresseur couplé à la quantité de réfrigérant circulant à la période initiale du démarrage calculée par ledit moyen d'estimation de la quantité de réfrigérant circulant à la période initiale du démarrage.

**6.** Dispositif d'estimation du couple d'un compresseur selon la revendication 5 **caractérisé en ce qu'**il est équipé d'un moyen d'estimation de la quantité de réfrigérant circulant à l'équilibre du bilan thermique qui calcule la quantité de réfrigérant circulant en régime stationnaire dudit compresseur en utilisant l'expression relationnelle de la quantité de réfrigérant circulant basée sur l'équilibre du bilan thermique dudit cycle de réfrigération, et **en ce que** ledit moyen d'estimation du couple estime le couple dudit compresseur en se basant sur la valeur résultat de la somme de la quantité de réfrigérant circulant à la période initiale du démarrage dudit compresseur calculée par ledit moyen de calcul de la quantité de réfrigérant circulant à la période initiale du démarrage, et de la quantité de réfrigérant circulant en régime constant obtenue par ledit moyen d'estimation de la quantité de réfrigérant circulant à l'équilibre du bilan thermique.

**7.** Dispositif d'estimation du couple d'un compresseur selon les revendications 5 ou 6 **caractérisé en ce que** ledit moyen d'estimation de la quantité de réfrigérant circulant à la période initiale du démarrage calcule la quantité de réfrigérant circulant à la période initiale du démarrage dudit compresseur en multipliant le débit de réfrigérant circulant de la période initiale au moment du plus grand volume, calculé en se basant sur le plus grand volume d'éjection dudit compresseur et sur le rapport entre le temps jusqu'à atteindre le plus grand couple après que ledit compresseur a démarré et ledit temps écoulé, par le terme d'atténuation, calculé en se basant sur ledit temps écoulé et sur la valeur correspondant au temps jusqu'à atteindre l'équilibre du bilan thermique après que ledit compresseur a démarré.

**8.** Dispositif d'estimation du couple d'un compresseur selon la revendication 1 **caractérisé en ce qu'**il est équipé d'un moyen d'estimation du couple de la phase stabilisée qui estime le couple dudit compresseur en se basant sur l'état de charge thermique dudit cycle de réfrigération, et **en ce que**, en fonction de l'étape suivant ledit démarrage du compresseur, il fait basculer le moyen qui estime le couple dudit compresseur entre plusieurs moyens d'estimation du couple qui incluent ledit moyen d'estimation du couple de la phase de démarrage et ledit moyen d'estimation du couple de la phase stabilisée.

**9.** Dispositif d'estimation du couple d'un compresseur de la revendication 8 **caractérisé en ce qu'**il est de plus équipé d'un moyen d'estimation du couple de la phase de transition qui change asymptotiquement la valeur estimée du couple depuis la valeur estimée du couple obtenue par ledit moyen d'estimation du couple de la phase de démarrage, vers la valeur estimée du couple obtenue par ledit moyen d'estimation du couple de la phase stabilisée.

**10.** Dispositif d'estimation du couple d'un compresseur selon les revendications 8 et 9 **caractérisé en ce que** ledit moyen d'estimation du couple de la phase de démarrage est un moyen qui calcule le couple dudit compresseur en se basant sur le temps écoulé après que ledit compresseur a démarré.

**11.** Dispositif d'estimation du couple d'un compresseur selon les revendications 8 à 10 **caractérisé en ce que** ledit moyen d'estimation du couple de la phase de démarrage est un moyen de définition de la limite supérieure du couple de la phase de démarrage qui définit la limite supérieure de la valeur estimée du couple de la phase de démarrage.

**12.** Dispositif d'estimation du couple d'un compresseur selon la revendication 11 **caractérisé en ce que** ledit moyen de définition de la limite supérieure du couple de la phase de démarrage définit la valeur supérieure de la valeur estimée du couple de ladite phase de démarrage en fonction de l'état de charge thermique dudit cycle de réfrigération.

13. Dispositif d'estimation du couple d'un compresseur selon l'une des revendications 8 à 12 **caractérisé en ce que** le basculement depuis l'estimation du couple par ledit moyen d'estimation du couple de la phase de démarrage vers l'estimation du couple par un autre moyen d'estimation du couple a lieu en se basant sur le résultat de la détermination par un moyen de détermination de l'achèvement de la phase de démarrage qui détermine l'achèvement de la phase de démarrage.

14. Dispositif d'estimation du couple d'un compresseur selon la revendication 13 **caractérisé en ce que** ledit moyen de détermination d'achèvement de la phase de démarrage détermine l'achèvement de la phase de démarrage en se basant sur la variation de la haute pression dudit cycle de réfrigération.

15. Dispositif d'estimation du couple d'un compresseur selon la revendication 9 **caractérisé en ce que** ledit moyen d'estimation du couple de la phase de démarrage calcule la valeur estimée du couple dans la phase de transition en se basant sur la plus grande valeur de la valeur estimée du couple à ladite phase de démarrage et sur la valeur estimée du couple obtenue par ledit moyen d'estimation du couple de la phase stabilisée.

**Figure 1**

Figure 2

Figure 3

Figure 4

Figure 5

**Figure 6**

**Figure 7**

**Figure 8**

Figure 9

**Office européen**
**des brevets**

# RAPPORT DE RECHERCHE EUROPEENNE

Numéro de la demande

EP 06 00 4145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 437 245 A (KABUSHIKI KAISHA TOYOTA JIDOSHOKKI) 14 juillet 2004 (2004-07-14) * alinéas [0004] - [0006], [0039] - [0044], [0047] - [0051]; revendications 3-5,9; figure 3 * | 1-4 | INV. B60H1/00 |
| D,A | WO 03/053727 A (VALEO CLIMATISATION; BEN YAHIA, MOHAMED) 3 juillet 2003 (2003-07-03) * colonnes 17-18; revendications * | 6 | |
| D,A | PATENT ABSTRACTS OF JAPAN vol. 017, no. 439 (M-1462), 13 août 1993 (1993-08-13) & JP 05 096936 A (NIPPONDENSO CO LTD), 20 avril 1993 (1993-04-20) * abrégé * | 1-14 | |

DOMAINES TECHNIQUES
RECHERCHES (IPC)

B60H

Le présent rapport a été établi pour toutes les revendications

| Lieu de la recherche | Date d'achèvement de la recherche | Examinateur |
|---|---|---|
| Munich | 10 avril 2006 | Chavel, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 00 4145

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2006

| Document brevet cité au rapport de recherche | | Date de publication | Membre(s) de la famille de brevet(s) | | Date de publication |
|---|---|---|---|---|---|
| EP 1437245 | A | 14-07-2004 | JP | 2004211663 A | 29-07-2004 |
| | | | US | 2004211204 A1 | 28-10-2004 |
| WO 03053727 | A | 03-07-2003 | AU | 2002364420 A1 | 09-07-2003 |
| | | | EP | 1456045 A1 | 15-09-2004 |
| | | | FR | 2833886 A1 | 27-06-2003 |
| | | | JP | 2005512870 T | 12-05-2005 |
| | | | US | 2005172652 A1 | 11-08-2005 |
| JP 05096936 | A | 20-04-1993 | JP | 2995951 B2 | 27-12-1999 |

EPO FORM P0460

Pour tout renseignement concernant cette annexe : voir Journal Officiel de l'Office européen des brevets, No.12/82